# EUROPÄISCHE PATENTSCHRIFT

(11) **EP 1 852 704 B1**
(45) Veröffentlichungstag und Bekanntmachung des Hinweises auf die Patenterteilung: **19.08.2009**
(21) Anmeldenummer: 07450038.0
(22) Anmeldetag: 01.03.2007
(51) Int. Cl.: G01N 35/10

(54) **Probeneingabevorrichtung**
Sample introduction device
Dispositif d'introduction d'échantillon

(30) Priorität: 02.05.2006 AT 7482006
(43) Veröffentlichungstag der Anmeldung: 07.11.2007
(73) Patentinhaber: F. Hoffmann-La Roche AG, 4070 Basel (CH); Roche Diagnostics GmbH, 68305 Mannheim (DE)
(72) Erfinder: Gulo, Stefan, 8054 Riederhof (AT)
(74) Vertreter: Babeluk, Michael

(56) Entgegenhaltungen:
- EP-A- 1 347 282
- FR-A- 2 857 750
- US-A- 4 274 285
- US-A- 4 499 053
- US-A- 5 455 007
- US-A- 5 555 920
- US-B1- 6 274 087

## Beschreibung

Die Erfindung betrifft eine Probeneingabevorrichtung mit einem einzigen Ansteckplatz für die automatisierte Eingabe medizinischer Proben, vorzugsweise Proben von Körperflüssigkeiten und Qualitätskontrollmedien, aus unterschiedlichen Probengefäßen.

Derartige Eingabevorrichtungen sind beispielsweise aus dem medizinischen Laborbetrieb bekannt, wo sie z.B. für Analysatoren für die Blutanalyse (Vollblut, Serum, Plasma) oder sonstige Messungen von Körperflüssigkeiten (Liquor, Pleuraflüssigkeit, Urin, etc.) verwendet werden. Zum Teil sind diese Analysatoren lediglich auf eine Art von Probengefäßen spezialisiert, so dass beispielsweise deren Eingabevorrichtung die Eingabe der Probe nur mit Hilfe einer Spritze erlauben.

Es bestand daher schon früher der Wunsch, Probeneingabeeinrichtungen zu entwickeln, welche sich für die Probeneingabe aus unterschiedlichen Probengefäßen eignen, ohne umständliche Adaptierungsarbeiten vornehmen zu müssen.

So ist beispielsweise aus der EP 0 297 082 ein Analysengerät zur Untersuchung von Körperflüssigkeitsproben bekannt geworden, welcher eine drehbare Andockschreibe aufweist, die in unterschiedlichen Drehstellungen mit einem Einfüllstutzen der Probenzuführleitung des Analysators in Verbindung gebracht werden kann. Über diese Andockscheibe kann auch die Probe zugeführt werden, wobei diese entweder mittels einer Schlauchpumpe eingesogen oder in die Probenzuführung eingespritzt werden kann. Der Nachteil eines derartigen Probeneingabesystems besteht darin, dass keine geschlossenen Probengefäße, wie z.B. sogenannte Vacutainer oder Monovetten verwendet werden können, sowie dass ein relativ großer Aufwand für die Reinigung der Probeneingabeöffnung besteht, um des Verschleppen von Probenrückständen zu vermeiden.

Eine ähnliche Probeneingabevorrichtung wie in der EP 0 297 082 wird in der DE 38 90 175 C1 beschrieben. Bei dieser Eingabevorrichtung ist eine um eine Achse drehbar gelagerte Verteilerscheibe vorgesehen, welche mehrere im gleichen Abstand zur Drehachse angeordnete Eingabeelemente aufweist, die über entsprechende Anschlüsse mit den zuzuführenden Medien verbunden sind. Die Verteilerscheibe ist über eine Trägerwelle im Gehäuse des Analysators gelagert, welcher weiters eine Steuereinheit für die Dreh- und Hubbewegung der Verteilerscheibe beinhaltet. In einer Drehposition weist die Verteilerscheibe eine Aussparung auf, so dass in dieser Position die Probeneingabeöffnung zur Eingabe der Probe mittels Pipette oder Spritze frei liegt. Mit Hilfe der in der DE 38 90 175 C1 beschriebenen Eingabevorrichtung kann somit die Probe aus einer Kapillare eingesogen oder mit Hilfe einer Kolbenspritze eingespritzt werden, wobei zur dichtenden Aufnahme der Kapillare bzw. der Kolbenspritze eine konische Eingabeöffnung vorgesehen ist, welche über eine starre, gasdichte Leitung direkt mit den Messzellen des Analysators verbunden ist. Die Eingabevorrichtung eignet sich allerdings nicht für eine weitere in Labors bevorzugte Eingabeart, nämlich der Eingabe der Probe aus verschlossenen Probengefäßen, beispielsweise aus Vacutainern oder Monovetten.

Bei einer aus der EP 0 564 439 A2 bekannten Eingabevorrichtung ist für die Zufuhr von Wasch- und Referenzmedien eine um eine feststehende Achse verschwenkbare Klappe vorgesehen, über welche bei geschlossener Klappe die Wasch- und Referenzmedien einem elastischen Eingabeelement des Analysators zugeführt werden. Bei geöffneter Klappe ist das Eingabeelement für das Einsaugen aus Kapillaren bzw. das Einspritzen mittels einer Kolbenspritze frei zugängig. Hier gelten auch die bereits zur EP 0 297 082 angeführten Nachteile.

Es sind auch Probeneingabevorrichtungen bekannt, mit welchen die Probe aus einer Kolbenspritze eingesogen werden kann. Dazu zählen eine Vielzahl von unterschiedlichen Eingabevorrichtungen, bei welchen eine verschwenkbare Eingabenadel vorgesehen ist, so dass in unterschiedlichen Stellungen der Nadel aus unterschiedlichen Probengefäßen die Probenflüssigkeit in den Analysator gesogen werden kann. In diesem Zusammenhang sei auf die US 4,499,053 A verwiesen, welche einen mechanisch relativ komplizierten Hubmechanismus mit Kulissenführung aufweist, wobei das Einsaugen einer Probe sowohl aus einer Kapillare als auch aus einer Kolbenspritze möglich ist. Dazu weist die Eingabenadel ein Eingabeelement auf, welches mit dessen zentraler Öffnung mit Hilfe einer Kulissensteuerung auf der Eingabenadel axial geführt werden kann. Durch einen Handgriff der Kulissensteuerung kann die Eingabenadel aus einer Ruheposition, in welcher die Nadel mit einem Anschluss für eine Waschlösung verbunden ist, in mehrere unterschiedliche Positionen hochgeschwenkt werden, wobei - bedingt durch die Kulissensteuerung - das Eingabeelement unterschiedliche Positionen entlang der Achse der Eingabenadel einnimmt. In einer der Hubpositionen ist die Nadelspitze völlig frei, so dass diese in offene Probengefäße eingetaucht werden kann und die Probe anschließend eingesogen wird. In einer weiteren Hubposition befindet sich die Nadelspitze innerhalb der zentralen Öffnung des Eingabeelementes, so dass in den freibleibenden Bereich der zentralen Öffnung eine Probenkapillare eingeschoben und dort gehalten werden kann. Die Probe kann anschließend durch die Pumpe des Analysators eingesogen werden. Schließlich ist eine weitere Hubposition vorgesehen, in welcher die Eingabenadel eine im Wesentlichen waagrechte Stellung einnimmt und das Eingabeelement ein kleines Stück der Nadelspitze freigibt. Der Konus einer Kolbenspritze kann nun über die Nadelspitze geführt und gegen die äußere Fläche des Eingabeelementes gepresst werden, wonach die Probe in den Analysator eingespritzt wird. Als Nachteil ist zu erwähnen, dass die Kolbenspritze von der Eingabevorrichtung nicht gehalten wird, dass durch die äußere Fläche des Eingabeelementes nur eine unzureichende Dichtfunktion gegeben ist und Gefahr besteht, dass Teile der Probe die Eingabeeinrichtung verunreinigen.

Ein großer Nachteil der Eingabevorrichtung gemäß US 4,499,053 A besteht allerdings darin, dass keine Möglichkeit besteht, die Probe mit Hilfe von verschlossenen Probenbehältern einzugeben.

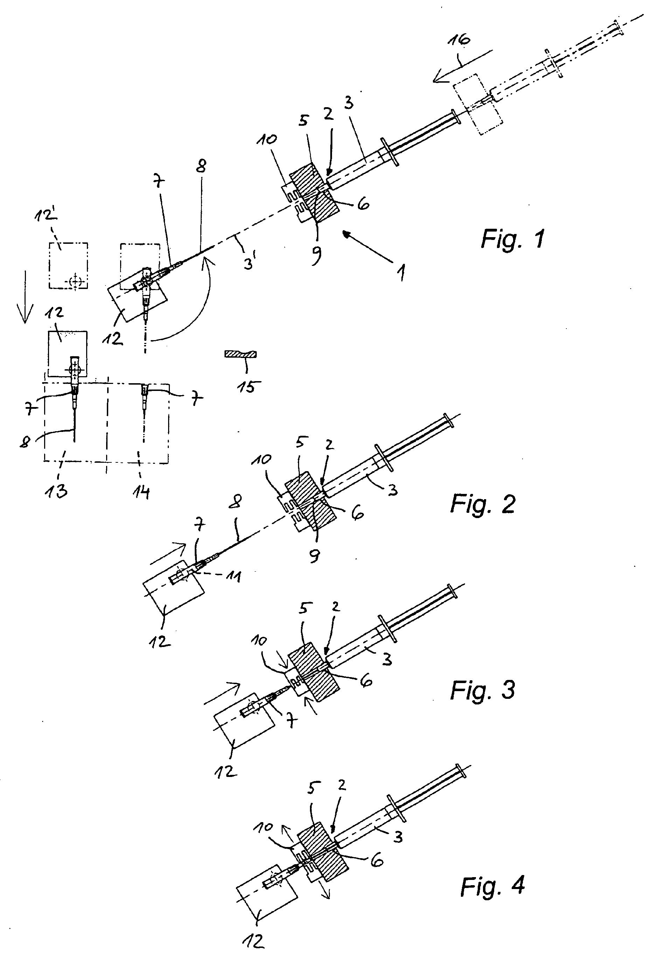

Weiterhin wird in der US 5,391,499 A ein Eingabesystem beschrieben, bei welchem die Probeneingabe mit zwei unterschiedlichen Probengefäßen, nämlich mit einer Kolbenspritze (siehe Fig. 1) oder einer Probenkapillare (siehe Fig. 2) möglich ist. Mit Hilfe eines drehbaren Elementes im Bereich der Probeneingabe kann anhand des Durchmessers des Probengefäßes automatisch festgestellt werden, ob eine Kolbenspritze oder eine Probenkapillare in die Eingabeöffnung eingeführt wurde und so ein für die beiden Eingabearten unterschiedliches Eingabeprogramm gestartet werden. Dabei wird die Eingabenadel mit Hilfe einer Antriebseinheit entweder in Längsrichtung nach vorne bewegt, um in die Kolbenspritze einzudringen oder zurückgezogen, um einer Kapillare Platz zu machen. Ein Nachteil des Eingabesystems gemäß US 5,391,499 A, welches vor jeder neuen Messung mit Hilfe einer Waschlösung gespült werden muss, besteht darin, dass damit das Einbringen einer Probe beispielsweise aus einem Vacutainer nicht möglich ist.

Weiters ist es bekannt, für unterschiedliche Probengefäße unterschiedliche Adapter zu verwenden, welche auf das eigentliche Eingabeelement des Analysators aufgesetzt oder in dieses eingeführt werden müssen. Dadurch wird allerdings der Manipulationsaufwand beträchtlich erhöht und das Risiko einer Fehlbedienung vergrößert.

Im Zusammenhang mit der automatisierten Probenentnahme aus verschlossenen Teströhrchen ist es auch bekannt, den Verschluss der Teströhrchen mit Hilfe einer Robotik, an deren Ende eine geschliffene Kanüle angeordnet ist, zu durchstoßen und die Probe zu entnehmen. Beispielsweise wird in der EP 0 452 892 B1 eine Vorrichtung zur Probenentnahme aus offenen und geschlossenen Behältern beschrieben, deren Entnahmenadel die Verschlusskappe eines Vacutainers durchdringen kann, aber nicht geeignet erscheint, in die kleinlumige Öffnung einer Kolbenspritze eingeführt zu werden. Als weiteren Nachteil benötigt die bekannte Probeneingabeeinrichtung eine eigene Waschstation für die Entnahmenadel.

Schließlich ist aus der EP 1 347 282 A2 eine Probeneingabevorrichtung mit einer am Analysator probeneingangsseitig angeordneten, feststehenden Eingabenadel bekannt. Diese weist ein axial auf der Eingabenadel verschiebbares, elastisches Eingabeelement mit einer konischen Eingabeöffnung auf. Weiters ist ein in Bezug auf das Eingabeelement verlagerbares und parallel zur Eingabenadel axial verschiebbares Haltelement vorgesehen, welches in einer ersten Stellung das Eingabeelement frei gibt und in einer zweiten Stellung über dem Eingabeelement eine konische Öffnung zur Aufnahme einer Kolbenspritze positioniert. Vorteilhafterweise kann in der ersten Stellung des Halteelementes, in welcher die konische Eingabeöffnung des elastischen Eingabeelementes freigegeben wird, die Probe entweder aus einer Kapillare eingesogen oder mit Hilfe einer Kolbenspritze eingespritzt werden. In der zweiten Stellung, welche - ausgehend von der ersten Stellung - durch eine translatorische oder rotatorische Verlagerung des Halteelementes erreicht wird, dient das Halteelement zur Aufnahme der Kolbenspritze, wobei diese über der Eingabenadel positioniert und durch eine anschließende Hubbewegung des Halteelementes über die Eingabenadel geschoben wird. Anschließend kann die Probe aus dem Inneren der Kolbenspritze gesogen werden. Die direkte Eingabe von Proben aus geschlossenen Probengefäßen, beispielsweise aus Vacutainern oder Monovetten, ist jedoch mit dieser Eingabevorrichtung nicht möglich. Weiters muss die feststehende Eingabenadel vor jeder Probeneingabe gereinigt werden.

Aufgabe der vorliegenden Erfindung ist es, eine Probeneingabevorrichtung für die Eingabe medizinischer Proben, vorzugsweise Proben von Körperflüssigkeiten und Qualitätskontrollmedien, derart weiterzubilden, dass die Probennahme aus unterschiedlichen offenen und geschlossenen Probengefäßen möglich ist, wobei der Aufwand im Hinblick auf die Reinigung der Eingabevorrichtung minimiert werden soll. Eine weitere Aufgabe besteht darin, eine weitgehend kontaminationsfreie Probeneingabevorrichtung zu schaffen, bei welcher die Probe weder mit der Halterung der Probengefäße noch mit dem Anwender in Kontakt kommt.

Diese Aufgabe wird erfindungsgemäß dadurch gelöst, dass in der Eingabevorrichtung Probentransportbehälter angeordnet sind, welche jeweils eine Kanüle aufweisen, die sowohl durch eine Öffnung in ein offenes als auch durch ein durchstechbares Verschlusselement in ein geschlossenes Probengefäß einführbar ist, sowie dass die Eingabevorrichtung über Führungselemente verfügt, die vor dem Einführen oder Einstechen der Kanüle des Probentransportbehälters in das Probengefäß führend und/oder zentrierend auf die Kanüle zugreifen. Durch die Verwendung von Führungselementen, die die Kanüle führen, insbesondere zentrieren oder stützen, kann eine ausreichend dünne Kanüle verwendet werden, die einerseits in die kleinlumige Öffnung beispielsweise eines Luer-Anschlusses einer Kolbenspritze eingeführt werden kann, ohne andererseits beim Durchstechen des Verschlusses eines Vacutainers zu verbiegen oder abzubrechen. Bevorzugt kann der Probentransportbehälter mit einer Stahlkanüle mit Kanülenschliff versehen sein.

Die Führungselemente für die Stahlkanüle können als aktiv zugreifende Elemente oder auch als passive Führungselemente, beispielsweise in Form einer konischen Trichteröffnung, ausgeführt sein.

Neben der Aufnahme der Probe dient der Probentransportbehälter auch zu deren Transport und Abgabe an weiterverarbeitende Bereiche des Analysators (z.B. Abgabe der Probe auf Teststreifen, in Reagenzienlösungen, in Messküvetten sowie in allfällige weitere interne Probentransportsysteme).

Bevorzugt weist der vorzugsweise als Einmalartikel ausgeführte Probentransportbehälter einen Kunststoffkörper mit einem Hohlraum zur Aufnahme der medizinischen Probe auf, welcher eingangsseitig mit einer Stahlkanüle mit Kanülenschliff versehen ist. Die Probe kommt somit in der Eingabevorrichtung nur mit dem Probentransportbehälter in Kontakt, welcher nach jeder Probennahme verworfen wird, so dass eine Reinigung der Eingabevorrichtung zur Gänze entfallen kann und jedes Kontaminationsrisiko für das Gerät vermieden wird.

Gemäß einer bevorzugten Ausführungsvariante der Erfindung sind eine Vielzahl von Probentransportbehältern in einem Vorratsbehälter der Eingabevorrichtung vorgesehen, wobei ein Halte- und Schwenkmechanismus vorgesehen ist, welcher einen Probentransportbehälter aus dem Vorratsbehälter entnimmt, zur Probenentnahme aus dem Probengefäß ausrichtet, in das Probengefäß einführt und nach der Probenaufnahme sowie Probenabgabe an einen Messort in den Vorratsbehälter oder in einen separaten Abfallbehälter entsorgt. Bei der Entsorgung in den Vorratsbehälter werden die gebrauchten Probentransportbehälter wieder an deren ursprünglichen Entnahmeort abgelegt und vom Entnahmesystem als gebraucht registriert.

Besonders vorteilhaft ist es, wenn die Eingabevorrichtung eine Einziehvorrichtung aufweist, die das am Ansteckplatz fixierte Probengefäß - bereits vor dem Einführen der Kanüle des Probentransportbehälters in das Probengefäß - in die Eingabevorrichtung einzieht, um jede Verletzungsgefahr durch die Kanüle sowie ein vorzeitiges Entfernen des Probengefäßes auszuschließen.

Bevorzugt steigt die zentrale Achse des Probengefäßes ausgehend vom Ansteckplatz an und weist einen Winkel von ca. 30° bis 40° zur horizontalen Ebene auf, um die Probe aus einem blasenfreien Bereich im Probengefäß ansaugen zu können.

Gemäß einer Weiterbildung der Erfindung weist die Eingabevorrichtung im Bereich des Ansteckplatzes für die Probengefäße eine vorzugsweise optische Überwachungseinheit auf, die zum Erkennen der korrekten Positionierung der verschiedenen Probengefäße dient.

Schließlich kann in einer bevorzugten Ausführungsform im Inneren der Eingabevorrichtung zumindest ein optischer Sensor vorgesehen sein, welcher zur Positionsüberwachung des Probentransportbehälters dient. Weiters kann mit diesem Sensor - bei Verwendung eines transparenten Probentransportbehälters - festgestellt werden, ob sich Luft oder Luftblasen in der Probe befinden.

Die Erfindung wird im Folgenden anhand von Zeichnungen näher erläutert. Es zeigen:
- Fig. 1: eine schematische Darstellung einer erfindungsgemäßen Probeneingabevorrichtung;
- Fig. 2 bis Fig. 6: Teile der Vorrichtung gemäß Fig. 1 in unterschiedlichen Betriebszuständen bei der Verwendung eines offenen Probenbehälters (z.B. Kolbenspritze);
- Fig. 7 bis Fig. 9: Teile der Vorrichtung gemäß Fig. 1 in unterschiedlichen Betriebszuständen bei der Verwendung eines geschlossenen Probenbehälters (z.B. Vacutainer);
- Fig. 10: eine konkrete Ausführungsvariante einer erfindungsgemäßen Probeneingabevorrichtung in einer Schnittdarstellung bei der Verwendung eines offenen Probenbehälters (z.B. Kolbenspritze); sowie
- Fig. 11: die Probeneingabevorrichtung gemäß Fig. 10 bei der Verwendung eines geschlossenen Probenbehälters (z.B. Vacutainer).

Die in den Fig. 1 bis Fig. 9 schematisch dargestellten Probeneingabevorrichtung 1 dient der automatisierten Eingabe medizinischer Proben, vorzugsweise der Eingabe von Proben von Körperflüssigkeiten und Qualitätskontrollmedien. Im Unterschied zu Eingabevorrichtungen gemäß Stand der Technik können mit der erfindungsgemäßen Vorrichtung an einem einzigen Ansteckplatz 2 unterschiedliche offene und geschlossene Probengefäße 3, 4 verwendet werden.

In Fig. 1 ist ein offenes Probengefäß 3, beispielsweise eine Kolbenspritze, dargestellt, welche am Ansteckplatz 2 mit Hilfe eines Halteelementes 5 fixiert ist. Dazu wird die Kolbenspritze 3 mit deren Luer- oder Luer-Lock-Anschluss in eine entsprechend ausgebildete konische Aufnahme 6 des Halteelementes 5, die in einer Durchgangsöffnung ausgebildet ist, eingesteckt und in der durch das Halteelement 5 vorgegebenen Lage fixiert. Weiters sind in der Eingabevorrichtung 1 Probentransportbehälter 7 angeordnet, welcher jeweils eine geschliffene Kanüle 8 aufweisen, die durch die Durchgangsöffnung im Halteelement 5 in die kleinvolumige Öffnung 9 des Luer-Anschlusses der Kolbenspritze 3 eingeführt werden können. Das Stahlrohr der Kanüle 8 weist beispielsweise einen Außendurchmesser von ca. 0,8 mm auf, so dass zum Einführen in die kleinlumige Öffnung 9 der Kolbenspritze 3 (Innendurchmesser ca. 1,2 mm) eine sehr genaue Führung (± 0,2 mm) erforderlich ist, um die Kanüle 8 ohne Schwierigkeiten in das Probengefäß 3 einführen zu können. Zu diesem Zweck weist die Eingabevorrichtung 1 Führungselemente 10 auf, die vor dem Einführen der Kanüle 8 des Probenbehälters 7 zentrierend und führend auf die Kanüle 8 zugreifen und sich am Zentrum der konischen Aufnahme 6 des Halteelementes 5 bzw. des Luer-Anschlusses ausrichten (siehe Fig. 3).

Der Probentransportbehälter 7 besteht im Wesentlichen aus einem Kunststoffkörper mit einem Hohlraum 11 zur Aufnahme der medizinischen Probe und ist eingangsseitig mit der Kanüle 8, beispielsweise einem Stahlrohr mit Kanülenschliff, versehen. Wie in Fig. 1 angedeutet, ist der Probentransportbehälter 7 als Einmalartikel ausgeführt und wird im Hilfe eines Halte- und Schwenkmechanismus 12 aus einem strichliert angedeuteten Vorratsbehälter 13 entnommen und nach Gebrauch in einen ebenfalls strichliert dargestellten Abfallbehälter 14 entsorgt.

Der Halte- und Schwenkmechanismus 12 ist in Fig. 1 in mehreren Positionen dargestellt. Ausgehend von einer strichliert angedeuteten Position 12' erfolgt eine automatische Entnahme eines Probentransportbehälters 7 aus dem Vorratsbehälter 13. Danach wird der Probentransportbehälter 7 verschwenkt, so dass dessen Achse mit der Achse 3' des Probengefäßes 3 zusammenfällt. Durch eine aufeinander zugerichtete translatorische Bewegung des Probengefäßes 3 und des Probentransportbehälters 7 gelangt die Kanüle 8 ins Innere der Kolbenspritze 3, so dass die hier vorliegende medizinische Probe entnommen werden kann. Danach wird die Probe auf einen hier nicht weiter beschriebenen Probenaufnahme- oder Probenmessplatz 15 transferiert und der gebrauchte Probentransportbehälter 7 in den Abfallbehälter 14 entsorgt. Bevor die geschliffene Kanüle 8 des Probentransportbehälters 7 in das Probengefäß 3 eindringt, wird diese - wie mit Pfeil 16 in Fig. 1 - angedeutet, in das Innere der Probeneingabevorrichtung 1 eingezogen, um eine Verletzung des Bedienungspersonals durch die Kanüle 8 oder ein vorzeitiges Abziehen der Probengefäße 3 vom Ansteckplatz 2 auszuschließen.

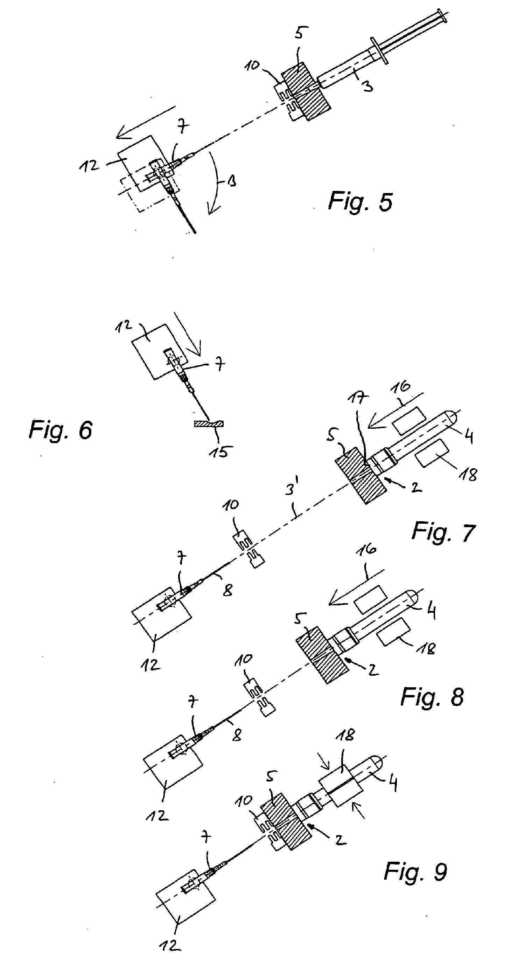

Wie in den Fig. 2 bis Fig. 6 im Detail dargestellt, wird der Probentransportbehälter 7 samt der Kanüle 8 in Richtung der Öffnung 9 der Kolbenspritze 3 bewegt (Fig. 2), danach schließen die Führungselemente 10, um das Einführen der Kanüle 8 in das Probengefäß 3 zu erleichtern (Fig. 3) und werden wieder geöffnet, sobald die Kanüle 8 in die Kolbenspritze 3 eingedrungen ist, um eine Kontamination der Führungselemente 10 durch eventuell austretende Probentröpfchen beim Eindringen der Kanüle in das Probengefäß oder beim Herausziehen dieser nach erfolgter Probenaufnahme zu vermeiden. Nach der Beendigung des Saugvorgangs bewegt sich der Probentransportbehälter 7 wieder in die Ausgangsposition zurück, wird um einen bestimmten Winkel β nach unten verschwenkt (Fig. 5) und gibt die aufgenommene Probe beispielsweise an einen Teststreifen 15 ab (siehe Fig. 6).

Bei der Verwendung eines geschlossenen Probengefäßes 4 (beispielsweise Vacutainer oder Monovette) wird - wie in den Fig. 7 bis Fig. 9 dargestellt - zunächst das durch ein Verschlusselement 17, beispielsweise ein Septum, verschlossene Gefäß 4 am Ansteckplatz 2 der Eingabevorrichtung eingelegt, wonach der Vacutainer 4 durch eine Einziehvorrichtung in Richtung Probentransportbehälter 7 bewegt wird (siehe Fig. 7 und Fig. 8). Danach wird der Vacutainer 4 mit Hilfe von Aufnahmebacken 18 am Ansteckplatz 2 fixiert. Der weitere Ablauf des Probentransfers erfolgt gemäß Fig. 3 bis Fig. 6, wobei das Verschlusselement bzw. Septum 17 von der Kanüle 8 des Probentransportbehälters 7 durchstoßen und die Probe aus dem Vacutainer 4 entnommen wird. Auch hier wird der Probentransportbehälter 7 samt der Kanüle 8 in Richtung des Verschlusselements 17 des Vacutainers bewegt, danach schließen die Führungselemente 10, um das Durchstoßen des Verschlusselements 17 und Einführen der Kanüle 8 durch das Verschlusselement 17 in den Vacutainer 4 zu erleichtern sowie ein Verbiegen der Kanüle zu vermeiden, und werden wieder geöffnet, sobald die Kanüle 8 in den Vacutainer 4 eingedrungen ist, um eine Kontamination der Führungselemente 10 durch eventuell austretende Probentröpfchen zu vermeiden.

Die zentrale Achse der Probengefäße 3, 4 steigt ausgehend vom Ansteckplatz 2 an und ist in einem Winkel von ca. 30° zur horizontalen Ebene geneigt, so dass die in den Probengefäßen 3, 4 enthaltenen medizinischen Proben frei von Luftblasen eingesaugt werden können. Das Probengefäß 4 (z.B. Monovette) kann hierdurch bereits im Gerät positioniert werden, bevor die Aufnahmebacken 18 zugreifen.

Aufgrund der Tatsache, dass zum Probentransport ein als Einmalartikel ausgeführter Probentransportbehälter 7 verwendet wird und die Probeneingabevorrichtung 1 mit den medizinischen Proben nicht in Kontakt kommt, sind keine Reinigungs- oder Wascheinrichtung erforderlich, so dass die Probeneingabevorrichtung 1 im Wesentlichen wartungsfrei konzipiert werden kann. Weiters erfolgt keine Kontamination der Halte- und Führungseinrichtungen.

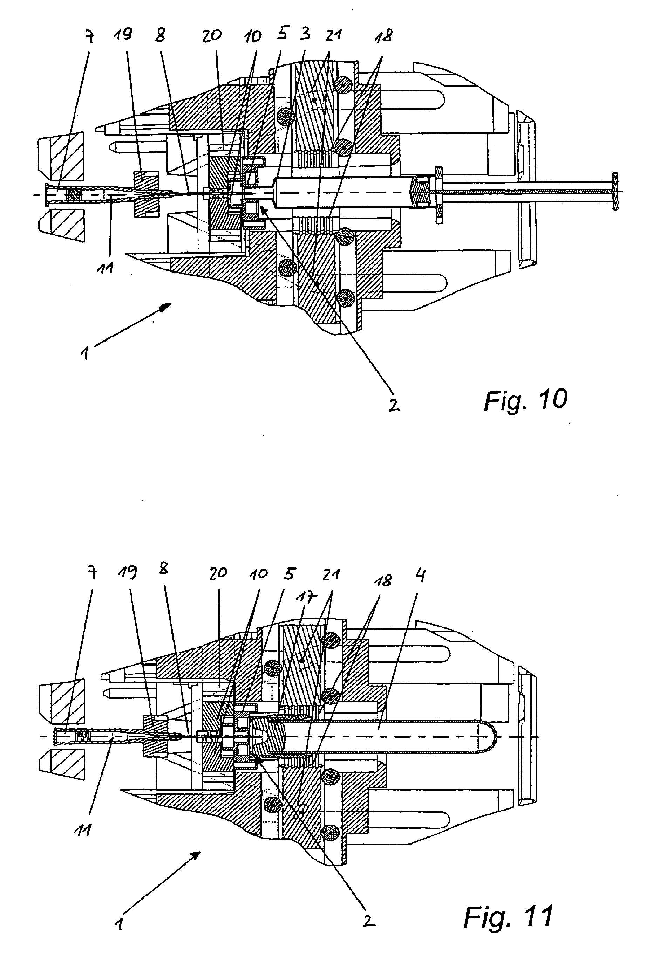

In den Fig. 10 und Fig. 11 ist eine durchkonstruierte Ausführungsvariante der erfindungsgemäßen Probeneingabevorrichtung 1 dargestellt, wobei in Fig. 10 ein offenes Probengefäß, z.B. eine Kolbenspritze 3, am Ansteckplatz 2 eingesetzt ist. Die Kolbenspritze 3 wird an deren Luer-Anschluss vom Halteelement 5 fixiert und ist in der gezeigten Betriebsstellung bereits in die Vorrichtung eingezogen. Beim Einsetzen einer Kolbenspritze 3 werden die Aufnahmebacken 18, die beispielsweise elektromotorisch betätigt werden, nicht eingesetzt, sie dienen zur Fixierung geschlossener Probengefäße 4, z.B. eines in Fig. 11 am Ansteckplatz 2 eingesetzten Vacutainers 4. In vorteilhafter Weise sind die Aufnahmebacken 8 mit Hilfe einer Steuerkulisse 21 geführt und können derart auf unterschiedliche Abmessungen verschlossener Probengefäße 4 eingestellt werden.

Vor dem Einführen der Kanüle 8 in die Kolbenspritze 3 bzw. durch das Verschlusselement 17 in den Vacutainer 4, wird diese mit Hilfe der Führungselemente 10 gestützt und zentriert. Die Führungselemente 10 werden von einer Steuerkulisse 20 geführt und können ebenfalls elektromotorisch angetrieben sein.

Die Eingabevorrichtung 1 kann im Bereich des Ansteckplatzes 2 für die Probengefäße 3, 4 eine hier nicht weiter dargestellte, vorzugsweise optische Überwachungseinheit aufweisen, die zum Erkennen der korrekten Positionierung unterschiedlicher Probengefäße 3, 4 dient. Es ist auch möglich, an der Probeneingabevorrichtung 1 Eingabetasten bzw. einen Touchscreen vorzusehen, um entsprechende Steuersignale für die Führungselemente 10, die Halteelemente 18 bzw. deren elektromotorische Antriebe händisch einzugeben.

Im Inneren der Eingabevorrichtung 1 kann weiterhin ein optischer Sensor 19 vorgesehen sein, welcher zur Positionsüberwachung des Probentransportbehälters 7 dient. Weiters kann mit dem Sensor 19 festgestellt werden, ob die im Hohlraum 11 des Probentransportbehälters 7 vorliegende Probe frei von Luftblasen eingesaugt wurde.

## Patentansprüche

1. Probeneingabevorrichtung (1) mit einem einzigen Ansteckplatz (2) für die automatisierte Eingabe medizinischer Proben, vorzugsweise Proben von Körperflüssigkeiten und Qualitätskontrollmedien, aus unterschiedlichen Probengefäßen (3, 4), **dadurch gekennzeichnet, dass** in der Eingabevorrichtung (1) Probentransportbehälter (7) angeordnet sind, welche jeweils eine Kanüle (8) aufweisen, die sowohl durch eine Öffnung (9) in ein offenes (3) als auch durch ein durchstechbares Verschlusselement (17) in ein geschlossenes Probengefäß (4) einführbar ist, sowie dass die Eingabevorrichtung (1) über Führungselemente (10) verfügt, die vor dem Einführen oder Einstechen der Kanüle (8) des Probentransportbehälters (7) in das Probengefäß (3, 4) führend und/oder zentrierend auf die Kanüle (8) zugreifen.

2. Probeneingabevorrichtung (1) nach Anspruch 1, **dadurch gekennzeichnet, dass** die Eingabevorrichtung (1) Halteelemente (5, 18) zum Fixieren eines offenen und eines geschlossenen Probengefäßes (3, 4) am einzigen Ansteckplatz (2) aufweist.

3. Probeneingabevorrichtung (1) nach einem der Ansprüche 1 oder 2, **dadurch gekennzeichnet, dass** der Probentransportbehälter (7) einen Kunststoffkörper mit einem Hohlraum (11) zur Aufnahme der medizinischen Probe aufweist, welcher eingangsseitig mit einem Stahlkanüle (8) mit Kanülenschliff versehen ist.

4. Probeneingabevorrichtung (1) nach einem der Ansprüche 1 bis 3, **dadurch gekennzeichnet, dass** der Probentransportbehälter (7) als Einmalartikel ausgeführt ist.

5. Probeneingabevorrichtung (1) nach Anspruch 4, **dadurch gekennzeichnet, dass** eine Vielzahl von Probentransportbehältern (7) in einem Vorratsbehälter (13) der Probeneingabevorrichtung (1) vorliegen, sowie dass ein Halte- und Schwenkmechanismus (12) vorgesehen ist, welcher einen Probentransportbehälter (7) aus dem Vorratsbehälter (13) entnimmt, zur Probenentnahme aus dem Probengefäß (3, 4) ausrichtet, in das Probengefäß (3, 4) einführt und nach der Probenaufnahme sowie Probenabgabe in den Vorratsbehälter (13) oder in einen separaten Abfallbehälter (14) entsorgt.

6. Probeneingabevorrichtung (1) nach einem der Ansprüche 1 bis 5, **dadurch gekennzeichnet, dass** das Halteelement (5) zur Fixierung von offenen Probengefäßen (3), beispielsweise in Form einer Kolbenspritze (3) mit Luer- oder Luer-Lock-Anschluss, am Ansteckplatz (2) eine konische Aufnahme (6) aufweist.

7. Probeneingabevorrichtung (1) nach einem der Ansprüche 1 bis 6, **dadurch gekennzeichnet, dass** für die Fixierung von geschlossenen Probengefäßen (4), beispielsweise von mit einem durchstechbaren Verschlusselement (17) verschlossenen Vacutainern oder Monovetten, Aufnahmebacken (18) vorgesehen sind, die das geschlossene Probengefäß (4) am Ansteckplatz (2) fixieren.

8. Probeneingabevorrichtung (1) nach Anspruch 7, **dadurch gekennzeichnet, dass** die Aufnahmebacken (18) mit Hilfe einer Steuerkulisse (21) geführt sind und derart auf unterschiedliche Abmessungen verschlossener Probengefäße (4) einstellbar sind.

9. Probeneingabevorrichtung (1) nach einem der Ansprüche 1 bis 8, **dadurch gekennzeichnet, dass** die Eingabevorrichtung (1) eine Einziehvorrichtung aufweist, die das am Ansteckplatz (2) fixierte Probengefäß (3, 4) in die Eingabenvorrichtung (1) einzieht.

10. Probeneingabevorrichtung (1) nach einem der Ansprüche 1 bis 9, **dadurch gekennzeichnet, dass** die Führungselemente (10) zur Zentrierung der Kanüle (8) des Probentransportbehälters (7) vor dem Einführen der Kanüle (8) in offene Probengefäße (3) oder vor dem Durchstoßen eines Verschlusselementes (17) geschlossener Probengefäße (4) an der Kanüle (8) anliegen und geöffnet werden, sobald die Kanüle (8) in das Probengefäß (3, 4) eingedrungen ist.

11. Probeneingabevorrichtung (1) nach einem der Ansprüche 1 bis 10, **dadurch gekennzeichnet, dass** die zentrale Achse (3') des Probengefäßes (3, 4) ausgehend vom Ansteckplatz (2) ansteigt und einen Winkel von ca. 30° bis 40° zur horizontalen Ebene aufweist.

## Claims

1. A sample entry device (1) with a single plug-in site (2) for the automated input of medical samples, preferably samples of body fluids or quality control media, from diverse sample vessels (3, 4), **characterised in that** sample transport containers (7) are provided in the entry device (1), which have a cannula (8) each, which can be inserted through an opening (9) into an open sample vessel (3) as well as through a penetrable lid element (17) into a closed sample vessel (4), and wherein the entry device (1) is provided with guiding elements (10), which prior to insertion or penetration of the cannula (8) of the sample transport vessel (7) into the sample vessel (3, 4) grip the cannula (8) to guide and center it.

2. Sample entry device (1) according to claim 1, **characterised in that** said sample entry device (1) is provided with holding elements (5, 18) for holding an open and a closed sample vessel (3, 4) at the single plug-in site (2).

3. Sample entry device (1) according to any of claims 1 or 2, **characterised in that** the sample transport container (7) has a plastic body with a hollow space (11) for receiving the medical sample and is provided on the entry side with a hollow steel needle (8) sharpened as a cannula.

4. Sample entry device (1) according to any of claims 1 to 3, **characterised in that** the sample transport container (7) is configured as a single-use item.

5. Sample entry device (1) according to claim 4, **characterised in that** a plurality of sample transport containers (7) are held in a storage space (13) of the sample entry device (1), and wherein a holding and swivelling mechanism (12) is provided, which takes a sample transport container (7) from the storage space (13), and aligns it for sample withdrawal from the sample vessel (3, 4), and inserts it into said sample vessel (3, 4), and discards it, after the sample has been withdrawn and transferred, into the storage space (13) or into a separate waste space (14).

6. Sample entry device (1) according to any of claims 1 to 5, **characterised in that** the holding element (5) for holding open sample vessels (3), for instance a syringe (3) with Luer or Luer-lock connector, has a conical receptor (6) at the plug-in site (2).

7. Sample entry device (1) according to any of claims 1 to 6, **characterised in that** the holding brackets (18) are provided for holding closed sample vessels (4), for instance vacutainers or monovettes closed by a lid element (17) ready for puncturing, said holding brackets (18) holding the closed sample vessel (4) in position at the plug-in site (2).

8. Sample entry device (1) according to claim 7, **characterised in that** the holding brackets (18) are guided by a link structure (21) and thus are adjustable to different dimensions of closed sample vessels (4).

9. Sample entry device (1) according to any of claims 1 to 8, **characterised in that** the entry device (1) is provided with a retracting mechanism, which pulls the sample vessels (3, 4) held in position at the plug-in site (2) into the entry device (1).

10. Sample entry device (1) according to any of claims 1 to 9, **characterised in that** the guiding elements (10) for centering the cannula (8) of the sample transport container (7) will grip the cannula (8) prior to insertion of the cannula (8) into open sample vessels (3) or penetration of a lid element (17) of closed sample vessels (4), and will open as soon as the cannula (8) has entered the sample vessel (3, 4).

11. Sample entry device (1) according to any of claims 1 to 10, **characterised in that** the central axis (3') of the sample vessel (3, 4) points upward starting from the plug-in site (2), and forms an angle of 30° to 40° with the horizontal plane.

## Revendications

1. Dispositif d'introduction d'échantillon (1) comprenant un unique emplacement de fixation (2) pour l'introduction automatisée d'échantillons médicaux, de préférence des échantillons de liquides corporels et d'agents de contrôle de qualité, provenant de différents récipients d'échantillons (3, 4), **caractérisé en ce que** dans le dispositif d'introduction (1) sont disposés des conteneurs de transport d'échantillons (7) qui présentent chacun une canule (8), laquelle peut être introduite aussi bien par une ouverture (9) pratiquée dans un élément de fermeture (3) ouvert que par un élément de fermeture (17) perforable dans un récipient d'échantillons (4) fermé, et **en ce que** le dispositif d'introduction (1) dispose d'éléments de guidage (10) qui ont accès à la canule (8) par guidage et/ou centrage avant l'introduction ou le piquage de la canule (8) du conteneur de transport d'échantillons (7) dans le récipient d'échantillons (3, 4).

2. Dispositif d'introduction d'échantillon (1) selon la revendication 1, **caractérisé en ce que** le dispositif d'introduction (1) présente des éléments de retenue (5, 18) pour la fixation d'un récipient d'échantillons ouvert et d'un récipient d'échantillons fermé (3, 4) sur l'unique emplacement de fixation (2).

3. Dispositif d'introduction d'échantillon (1) selon l'une quelconque des revendications 1 ou 2, **caractérisé en ce que** le conteneur de transport d'échantillon (7) comporte un corps plastique avec une cavité (11) pour le logement de l'échantillon médical, qui est doté côté entrée d'une canule d'acier (8) avec poli de canule.

4. Dispositif d'introduction d'échantillon (1) selon l'une quelconque des revendications 1 à 3, **caractérisé en ce que** le conteneur de transport d'échantillons (7) est réalisé sous forme d'article à usage unique.

5. Dispositif d'introduction d'échantillon (1) selon la revendication 4, **caractérisé en ce qu'**on dispose d'une pluralité de conteneurs de transport d'échantillons (7) dans un conteneur de stockage (13) du dispositif d'introduction d'échantillon (1) et **en ce qu'**il est prévu un mécanisme de retenue et de pivotement (12) qui prélève un conteneur de transport d'échantillons (7) sur le conteneur de stockage (13), l'oriente après le prélèvement d'échantillon sur le récipient d'échantillons (3, 4), l'introduit dans le récipient d'échantillons (3, 4) et l'évacue après le prélèvement d'échantillon et la délivrance d'échantillon dans le conteneur de stockage (13) ou dans un conteneur à déchets (14) séparé.

6. Dispositif d'introduction d'échantillon (1) selon l'une quelconque des revendications 1 à 5, **caractérisé en ce que** l'élément de retenue (5) comporte un logement (6) conique pour la fixation de récipients d'échantillons (3) ouverts et par exemple sous la forme d'une seringue à piston (3) avec un raccordement Luer ou un raccordement Luer-Lock, sur l'emplacement de fixation (2).

7. Dispositif d'introduction d'échantillon (1) selon l'une quelconque des revendications 1 à 6, **caractérisé en ce que** des mâchoires de logement (18), qui fixent le récipient d'échantillon (4) fermé sur l'emplacement de fixation (2), sont prévues pour la fixation de récipients d'échantillons (4) fermés par exemple de Vacutainers ou Monovettes fermés avec un élément de fermeture (17) perforable.

8. Dispositif d'introduction d'échantillon (1) selon la revendication 7, **caractérisé en ce que** les mâchoires de logement (18) sont guidées à l'aide d'une coulisse à commande (21) et sont réglables de cette façon pour différentes dimensions de récipients d'échantillons (4) fermés.

9. Dispositif d'introduction d'échantillon (1) selon l'une quelconque des revendications 1 à 8, **caractérisé en ce que** le dispositif d'entrée (1) présente un dispositif d'introduction qui introduit le récipient d'échantillons (3, 4) fixé sur l'emplacement de fixation (2) dans le dispositif d'entrée (1).

10. Dispositif d'introduction d'échantillon (1) selon l'une quelconque des revendications 1 à 9, **caractérisé en ce que** les éléments de guidage (10) s'appliquent sur la canule (8) pour le centrage de la canule (8) du conteneur de transport d'échantillons (7) avant l'introduction de la canule (8) dans des récipients d'échantillons (3) ouverts ou avant le passage à travers un élément de fermeture (17) de récipients d'échantillons (4) fermés et sont ouverts dès que la canule (8) a pénétré dans le récipient d'échantillons (3, 4).

11. Dispositif d'introduction d'échantillon (1) selon l'une quelconque des revendications 1 à 10, **caractérisé en ce que** l'axe (3') central du récipient d'échantillons (3, 4) augmente à partir de l'emplacement de fixation (2) et présente un angle d'environ 30° à 40° par rapport au plan horizontal.
